# EUROPEAN PATENT APPLICATION

(11) **EP 2 538 710 A1**
(43) Date of publication of application: **26.12.2012**
(21) Application number: 11744461.2
(22) Date of filing: 19.01.2011
(51) Int. Cl.: H04W 16/18

(54) **IDENTIFICATION INFORMATION ALLOCATION DEVICE AND IDENTIFICATION INFORMATION ALLOCATION METHOD**

(30) Priority: 17.02.2010 JP 2010032660
(71) Applicant: NTT DOCOMO, INC., Chiyoda-ku Tokyo 100-6150 (JP)
(72) Inventor: SHINKE Yoshiyasu, Tokyo 100-6150 (JP); YAMAGUCHI Yuuya, Tokyo 100-6150 (JP); OMORI Hiroo, Tokyo 100-6150 (JP); OTSUKA Tomohisa, Tokyo 100-6150 (JP)
(74) Representative: Viering, Jentschura & Partner
(86) International application number: PCT/JP2011/050849
(87) International publication number: WO 2011/102172

(57) **Abstract**

An objective of the present invention is to allocate an ID of a communication area of a base station efficiently and appropriately. The identification information allocation device 1 includes a group generation module 3 that groups the communication areas of the base station, a group ID allocation module 6 that allocates a group ID to grouped groups, and an ID allocation module 9 that allocates the ID to the communication area of the base station on the basis of the group ID.

## Description

### Technical Field

The present invention relates to an identification information allocation device and an identification information allocation method for allocating identification information of a communication area of a base station in mobile communication.

### Background Art

In mobile communication, in order that a mobile device can identify a communication area of a base station, a management entity of the base station needs to allocate an ID to each communication area (sector) of the base station. For example, in W-CDMA (Wideband Code Division Multiple Access), which is one of the communication methods of third generation mobile phones (3G), 512 Primary Scrambling Codes are allocated as described in Non-Patent Literature 1.

### Citation List

### Non Patent Literature

Non-Patent Literature 1: 3GPP (3RD Generation Partnership Project) TS25.213 V9.0.0 (5. 2. 2 Scrambling code)

### Summary of Invention

### Technical Problem

On the other hand, in one of the mobile communication systems using OFDMA (Orthogonal Frequency Division Multiple Access), which is different from W-CDMA , an ID needs to be allocated to a sector, taking into account three group IDs (identification information allocated to a group of sectors), but a method of efficiently allocating an ID and a group ID has not been established yet.

Moreover, if the same ID is allocated to adjoining sectors, channel estimation accuracy deteriorates, and thus, the signal of the base station cannot be accurately demodulated, and there is a concern that the communication quality might be lowered. Thus, when an ID is to be allocated, it is necessary to allocate one ID to a sector and also to repeatedly allocate it so that the same LID is not duplicated in the adjoining sectors.

Similarly, if the same group ID is allocated to a group of adjoining sectors, the channel estimation accuracy deteriorates and thus, the signal of the base station cannot be accurately demodulated, and there is a concern that the communication quality might be lowered. Thus, when a group ID is to be allocated, it is necessary to allocate one group ID to a group of sectors and also to repeatedly allocate it so that the same group ID is not duplicated in the group of adjoining sectors.

The present invention has the objective of providing an identification information allocation device and an identification information allocation method which allocates an ID of a communication area of a base station and a group ID of a group of the communication areas of the base station efficiently and appropriately.

### Solution to Problem

In order to solve the above-described problems, an identification information allocation device of the present invention is an identification information allocation device that allocates identification information for identifying each communication area in a plurality of communication areas of a base station in a mobile communication system, including first representative point determining means that determines a first representative point that is an arbitrary position in the communication area; second representative point determining means that groups the first representative points determined by the first representative point determining means in a first predetermined number or less and determines a second representative point on the basis of the grouped first representative points; third representative point determining means that groups the second representative points determined by the second representative point determining means in a second predetermined number or less and determines a third representative point on the basis of the grouped second representative points; first identification information allocation means that allocates first identification information for identifying the first representative point determined by the first representative point determining means on the basis of a group represented by the second representative point determined by the second representative point determining means; second identification information allocation means that allocates second identification information for identifying the second representative point determined by the second representative point determining means; third identification information allocation means that allocates third identification information for identifying the third representative point determined by the third representative point determining means; and identification information allocation means that allocates identification information of the communication area on the basis of the first identification information allocated by the first identification information allocation means, the second identification information allocated by the second identification information allocation means, and the third identification information allocated by the third identification information allocation means.

Moreover, the identification information allocation device of the present invention includes:
a first representative point determining step in that the identification information allocation device that allocates identification information for identifying each communication area with respect to a plurality of the communication areas of a base station in a mobile communication system determines a first representative point that is an arbitrary position in the communication area; a second representative point determining step in that the identification information allocation device groups the first representative points determined in the first representative point determining step in a first predetermined number or less and determines a second representative point on the basis of the grouped first representative points; a third representative point determining step in that the identification information allocation device groups the second representative points determined in the second representative point determining step in a second predetermined number or less and determines a third representative point on the basis of the grouped second representative points; a first identification information allocation step in that the identification information allocation device allocates first identification information for identifying the first representative point determined in the first representative point determining step on the basis of a group represented by the second representative point determined in the second representative point determining step; a second identification information allocation step in that the identification information allocation device allocates second identification information for identifying the second representative point determined in the second representative point determining step; a third identification information allocation step in that the identification information allocation device allocates third identification information for identifying the third representative point determined in the third representative point determining step; and an identification information allocation step in that the identification information allocation device allocates identification information of the communication area on the basis of the first identification information allocated in the first identification information allocation step, the second identification information allocated in the second identification information allocation step, and the third identification information allocated in the third identification information allocation step.

According to this invention, the first representative point that is an arbitrary position in the communication area is determined, the first representative points are grouped in the first predetermined number or less, the second representative point is determined on the basis of the grouped first representative points, the second representative points are grouped in the second predetermined number or less, the third representative point is determined on the basis of the grouped second representative points, the third identification information for identifying the third representative point is allocated, the second identification information for identifying the second representative point is allocated, the first identification information for identifying the first representative point is allocated on the basis of the group represented by the second representative point, and the identification information of the communication area is allocated on the basis of the first identification information, the second identification information, and the third identification information. As a result, the ID of the communication area of the base station and the group ID of the group of the communication areas of the base station can be allocated efficiently and appropriately.

Moreover, in the identification information allocation device of the present invention, the second representative point determining means preferably groups the first representative points having a short distance from each other in the first predetermined number or less.

According to the present invention, the first representative points having a short distance from each other are grouped in the first predetermined number or less. By grouping the first representative points within a range where the first representative points closely gather as in the above, the grouped area can be set small, and the groups with the same second identification information can be prevented from adjoining it. That is, the group ID of the group of the communication areas of the base station can be allocated efficiently and appropriately.

Moreover, in the identification information allocation device of the present invention, the third representative point determining means preferably groups the second representative points having a short distance from each other in the second predetermined number or less.

According to the present invention, the second representative points having a short distance from each other are grouped in the second predetermined number or less. By grouping the second representative points within a range where the second representative points closely gather as in the above, the grouped area can be set small, and the groups with the same third identification information can be prevented from adjoining each other. That is, the group ID of the group of the communication areas of the base station can be allocated efficiently and appropriately.

Moreover, in the identification information allocation device of the present invention, when allocating the first identification information, the first identification information allocation means preferably allocates the first identification information so that the first identification information of the first representative points of the adjoining communication areas are not duplicated in the plurality of communication areas of the same base station.

According to the present invention, when the first identification information is to be allocated, the first identification information is allocated so that the first identification information of the first representative points in the adjoining communication areas are not duplicated in the plurality of communication areas of the same base station. As a result, the first identification information can be repeatedly allocated so that the first identification information is not duplicated in the communication areas in the same base station. That is, the group ID of the group of the communication areas of the base station can be allocated efficiently and appropriately.

Moreover, in the identification information allocation device of the present invention, when allocating the first identification information, the first identification information allocation means preferably allocates the first identification information so that the first identification information of the first representative point of the communication area adjacent to the communication area represented by the first representative point and the first identification information are not duplicated in the communication areas of the adjoining base stations.

According to the present invention, when the first identification information is allocated, the first identification information is allocated so that the first identification information of the first representative point of the communication area adjacent to the communication area represented by the first representative point and the first identification information are not duplicated in the adjoining communication areas of the base station. As a result, the first identification information can be allocated repeatedly so that the first identification information is not duplicated in the communication areas of the adjoining base station. That is, the group ID of the group of the communication areas of the base station can be allocated efficiently and appropriately

Moreover, in the identification information allocation device of the present invention, the second identification information allocation means preferably allocates the second identification information to the second representative point in the order of a distance between a first predetermined base point and the second representative point from the shortest.

According to this invention, the second identification information is allocated to the second representative point in the order of the distance between the first predetermined base point and the second representative point from the shortest distance. As a result, the group ID of the group of the communication areas of the base station can be allocated efficiently and appropriately.

Moreover, in the identification information allocation device of the present invention, the third identification information allocation means preferably allocates the third identification information to the third representative point in the order of a distance between a second predetermined base point and the third representative point from the shortest.

According to this invention, the third identification information is allocated to the third representative point in the order of the distance between the second predetermined base point and the third representative point from the shortest distance. As a result, the group ID of the group of the communication areas of the base station can be allocated efficiently and appropriately.

In the identification information allocation device of the present invention, among the groups, each represented by the third representative point determined by the third representative point determining means of the identification information allocation device with respect to the communication area of the base station managed by one management entity, to the third representative point of a boundary group that is a group adjacent to the group represented by the third representative point determined by the third representative point determining means of the identification information allocation device with respect to the communication area of the base station managed by another management entity, the third identification information allocation means preferably selects and allocates the third identification information that is different from the third identification information allocated to the third representative point of the boundary group managed by another management entity.

According to this invention, to the third representative point of the boundary group, the third identification information that is different from the third identification information allocated to the third representative point of the boundary group managed by another management entity is selected and allocated. As a result, it becomes unnecessary to check duplication of the third identification information across control, and the group ID of the group of the communication areas of the base station can be allocated efficiently and appropriately.

Moreover, in the identification information allocation device of the present invention, the identification information allocation means preferably allocates identification information of the communication area on the basis of an identification information allocation table that is an identification information allocation table stored in advance in the storing module of the identification information allocation device and can uniquely determine identification information from a combination of the first identification information, the second identification information, and the third identification information.

According to this invention, the identification information of the communication area is allocated on the basis of the identification information allocation table that can uniquely determine the identification information from the combination of the first identification information, the second identification information, and the third identification information. As a result, identification information can be easily determined, and the ID of the communication area of the base station can be allocated efficiently and appropriately.

Moreover, in the identification information allocation device of the present invention, the identification information allocation means preferably calculates a separation distance between the first representative point of the communication area and the first representative point of the communication area to that the same identification information as the identification information to be allocated has been already allocated and allocates the identification information so that a predetermined distance can be ensured for the separation distance when the identification information is allocated to the communication area.

According to this invention, when identification information is to be allocated to the communication area, the separation distance between the first representative point of the communication area and the first representative point of the communication area to that the same identification information as the identification information to be allocated has been already allocated is calculated, and the identification information is allocated so that the predetermined distance can be ensured for the separation distance. As a result, allocation can be made repeatedly so that the IDs are not duplicated in the communication areas of the adjacent base stations. That is, the ID of the communication area of the base station can be allocated efficiently and appropriately.

### Advantageous Effects of Invention

The present invention can allocate the ID of the communication area of the base station and the group ID of the group of the communication areas of the base station efficiently and appropriately.

### Brief Description of Drawings

[Fig. 1] Fig. 1 is a block diagram illustrating a configuration of an identification information allocation device of this embodiment.
[Fig. 2] Fig. 2 is a hardware configuration diagram of an identification information allocation device 1.
[Fig. 3] Fig. 3 is a table illustrating an example of data held by a base station specification management module21.
[Fig. 4] Fig. 4 is a table illustrating an example of data held by a parameter management module 22.
[Fig. 5] Fig. 5 is a table illustrating an example of data held by a data management module 23.
[Fig. 6] Fig. 6 is a table illustrating an example of data held by the data management module 23.
[Fig. 7] Fig. 7 is a table illustrating an example of data held by the data management module 23.
[Fig. 8] Fig. 8 is a diagram illustrating an electric wave projecting spot from a base station.
[Fig. 9] Fig. 9 is an explanatory diagram illustrating group generation by a group generation module 3.
[Fig. 10] Fig. 10 is an explanatory diagram illustrating allocation of a cell group ID to a group representative point.
[Fig. 11] Fig. 11 is an explanatory diagram illustrating allocation of a Hopping pattern to a section representative point.
[Fig. 12] Fig. 12 is a diagram illustrating an example of a range of a boundary group.
[Fig. 13] Fig. 13 is an explanatory diagram illustrating allocation of a Local ID to a sector representative point.
[Fig. 14] Fig. 14 is an explanatory diagram illustrating allocation of the Local ID in an adjacent sector.
[Fig. 15] Fig. 15 is a diagram illustrating a separation distance of the sector representative point.
[Fig. 16] Fig. 16 is a flowchart illustrating processing of the identification information allocation device 1.
[Fig. 17] Fig. 17 is a flowchart illustrating processing when the Hopping pattern that is different from the adjacent boundary area is to be allocated.
[Fig. 18] Fig. 18 is a flowchart illustrating processing for ensuring the separation distance of a PCI allocation module 11.
[Fig. 19] Fig. 19 is a table illustrating state transition No. 1 of data held by the data management module 23 with processing of the identification information allocation device 1.
[Fig. 20] Fig. 20 is a table illustrating state transition No. 2 of data held by the data management module 23 with processing of the identification information allocation device 1.
[Fig. 21] Fig. 21 is a table illustrating state transition No. 3 of data held by the data management module 23 with processing of the identification information allocation device 1.
[Fig. 22] Fig. 22 is a table illustrating state transition No. 4 of data held by the data management module 23 with processing of the identification information allocation device 1.
[Fig. 23] Fig. 23 is a table illustrating state transition No. 5 of data held by the data management module 23 with processing of the identification information allocation device 1.
[Fig. 24] Fig. 24 is a table illustrating state transition No. 6 of data held by the data management module 23 with processing of the identification information allocation device 1.
[Fig. 25] Fig. 25 is a table illustrating state transition No. 7 of data held by the data management module 23 with processing of the identification information allocation device 1.
[Fig. 26] Fig. 26 is a table illustrating state transition No. 8 of data held by the data management module 23 with processing of the identification information allocation device 1.

### Description of Embodiments

In this embodiment, an embodiment of allocating an ID called a PCI (Physical Cell ID) (identification information) to a sector, giving consideration to three group IDs, that is, a Local ID (first identification information), a Cell group ID (second identification information) and a Hopping pattern (third identification information) in the OFDMA method is shown as an example.

An embodiment of the present invention will be described below by referring to the attached drawings. If possible, the same reference numerals are given to the same modules, and duplicated explanation will be omitted.

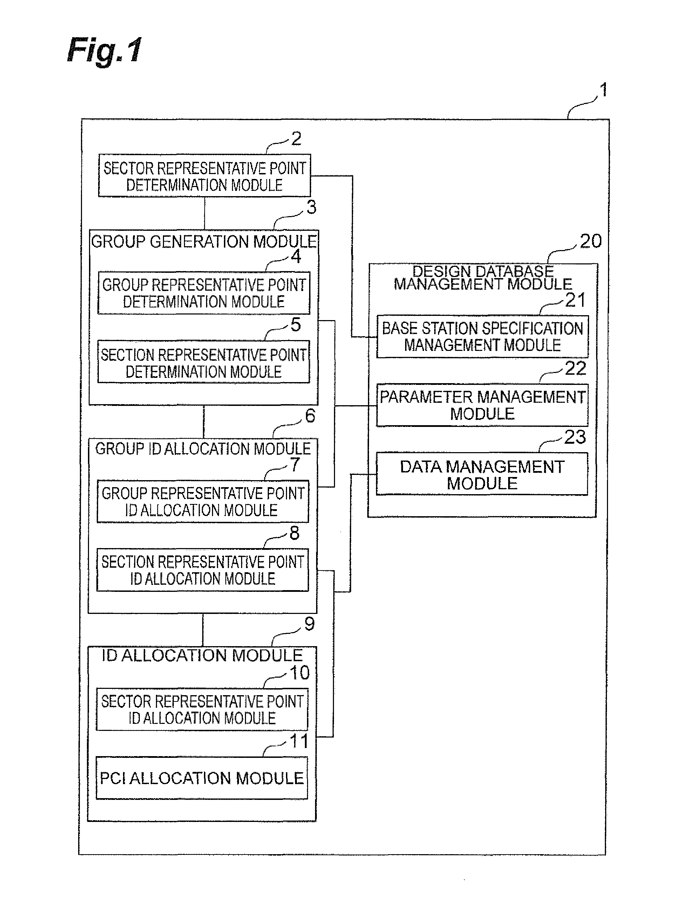

Fig. 1 is a block diagram illustrating a configuration of an identification information allocation device of this embodiment. As illustrated in Fig. 1, this identification information allocation device 1 includes a sector representative point determination module 2 (first representative point determining means), a group generation module 3, a group representative point determination module 4 (second representative point determining means), a section representative point determination module 5 (third representative point determining means), a group ID allocation module 6, a group representative point allocation module 7 (second identification information allocation means), a section representative point ID allocation module 8 (third identification information allocation means), an ID allocation module 9, a sector representative point ID allocation module 10 (first identification information allocation means), a PCI allocation module 11 (identification information allocation means), a design database management module 20, a base station specification management module 21, a parameter management module 22, and a data management module 23.

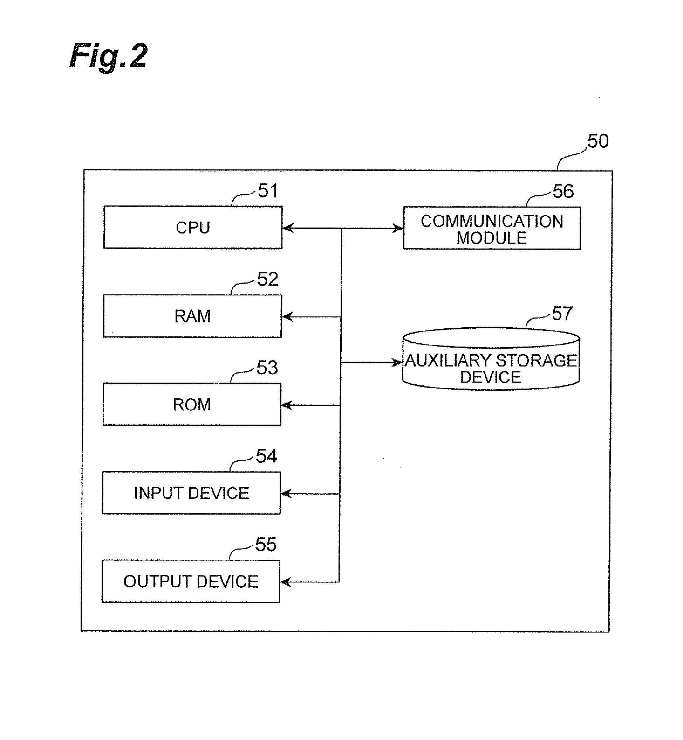

The identification information allocation device 1 is composed of hardware such as a CPU and the like. Fig. 2 is a hardware configuration diagram of the identification information allocation device 1. The identification information allocation device 1 illustrated in Fig 1 is physically configured as a computer system including a CPU 51, a RAM 52 and a ROM 53 which are main storage devices, an input device 54 such as a keyboard, a mouse and the like which are input devices, an output device 55 such as a display, a communication module 56 which is a data transmission/reception device such as a network card and the like, an auxiliary storage device 57 such as a hard disk and the like. Functions of each functional block illustrated in Fig. 1 are realized by having predetermined computer software read onto the hardware such as the CPU 51, the RAM 52 and the like illustrated in Fig. 2 so as to operate the input device 54, the output device 55, and the communication module 56 under control of the CPU 51 and by reading/writing of data in the RAM 52 and the auxiliary storage device 57. Each functional block will be described below on the basis of the functional blocks illustrated in Fig. 1.

The design database management module 20 (storing module) is provided with the base station specification management module 21, the parameter management module 22, and the data management module 23 and holds basic data required when the identification information allocation device 1 allocates a PCI of a sector.

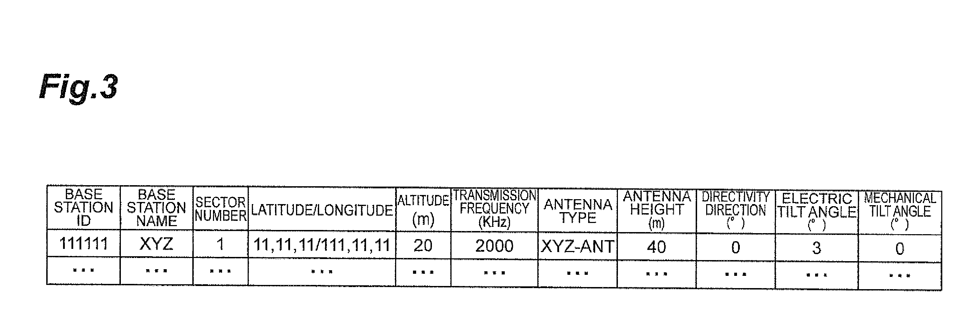

The base station specification management module 21 holds basic data used when determining a sector representative point (first representative point). One of the specific examples of data held by the base station specification management module 21 is illustrated in Fig. 3. The base station specification management module 21 holds a base station ID, a base station name, a sector number, latitude/longitude, altitude, transmission frequency, antenna type, antenna height, directivity direction, electric tilt angle, and mechanical tilt angle illustrated in Fig. 3, for example.

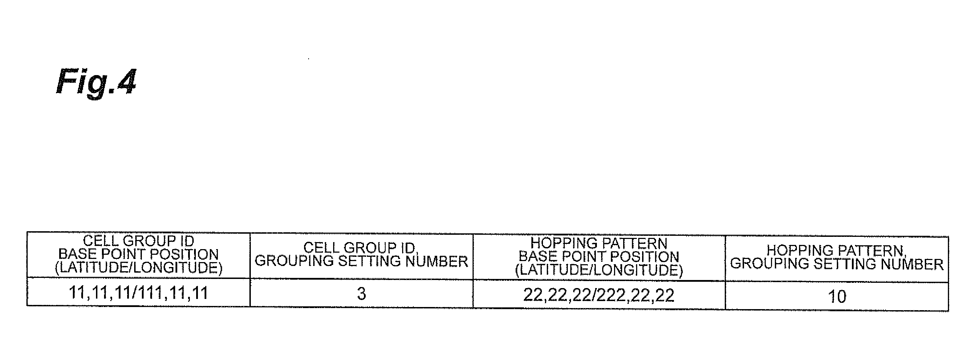

The parameter management module 22 holds data for managing a grouping setting number and a position to be a base point in grouping used when a group representative point (second representative point) and a section representative point (third representative point) are determined. One of the specific examples of data held by the parameter management module 22 is illustrated in Fig. 4. The parameter management module 22 holds a Cell group ID base point (first predetermined base point) position, Cell group ID grouping setting number (first predetermined number), the Hopping pattern base point (second predetermined base point) position, and the Hopping pattern grouping setting number (second predetermined number).

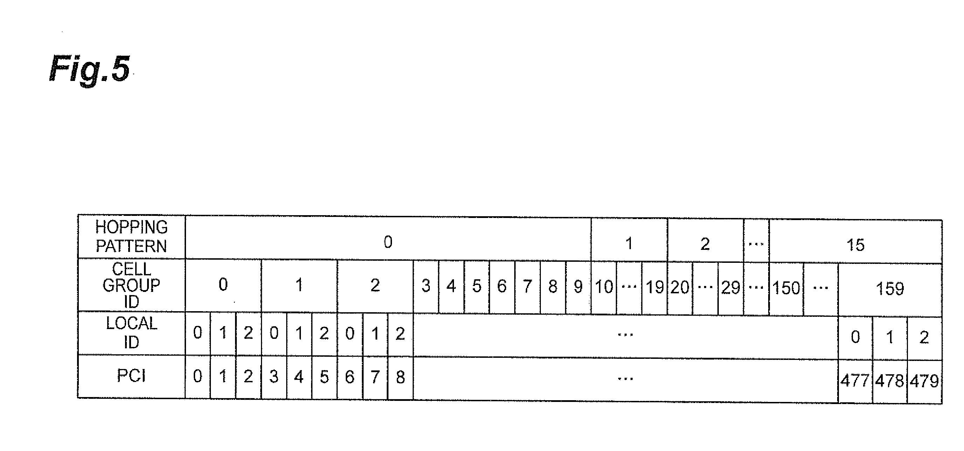

The data management module 23 holds a correspondence table of all the IDs (identification information allocation table). One of the specific examples of data held by the data management module 23 is illustrated in Fig. 5. The data management module 23 holds a correspondence table of Hopping patterns, Cell group ID, Local ID, and PCI illustrated in Fig. 5, for example. The Hopping pattern can use IDs of 0 to 16, the Cell group ID can use IDs af 0 to 167, the Local ID can use IDs of 0 to 2 if there are two antennas in the sector of the base station or 0 to 5 if there is one antenna, and the PCI can use IDs of 0 to 503 in general, but in this embodiment, the ID of 16 of the Hopping pattern, the IDs of 160 to 167 of the Cell group ID, and the IDs of 480 to 503 of the PCI are used as preliminary IDs when the base station is newly installed, for example. It is possible to re-allocate an ID again to all the base stations in the area when the base station is newly installed without providing preliminary IDs.

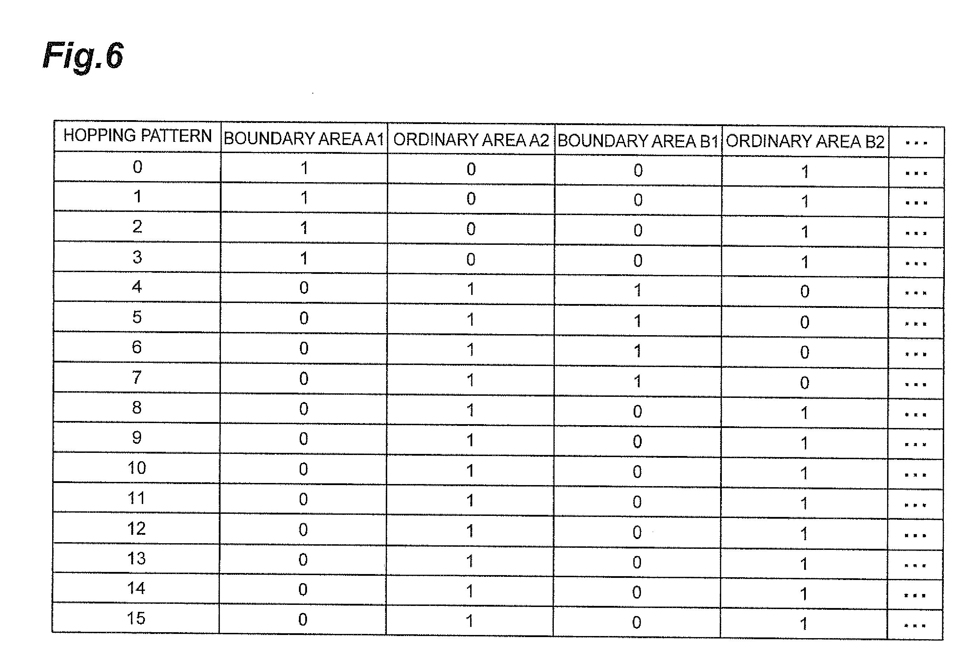

Moreover, the data management module 23 holds a divided table indicating allocable Hopping patterns according to the area as in Fig. 6, for example. The contents will be described later.

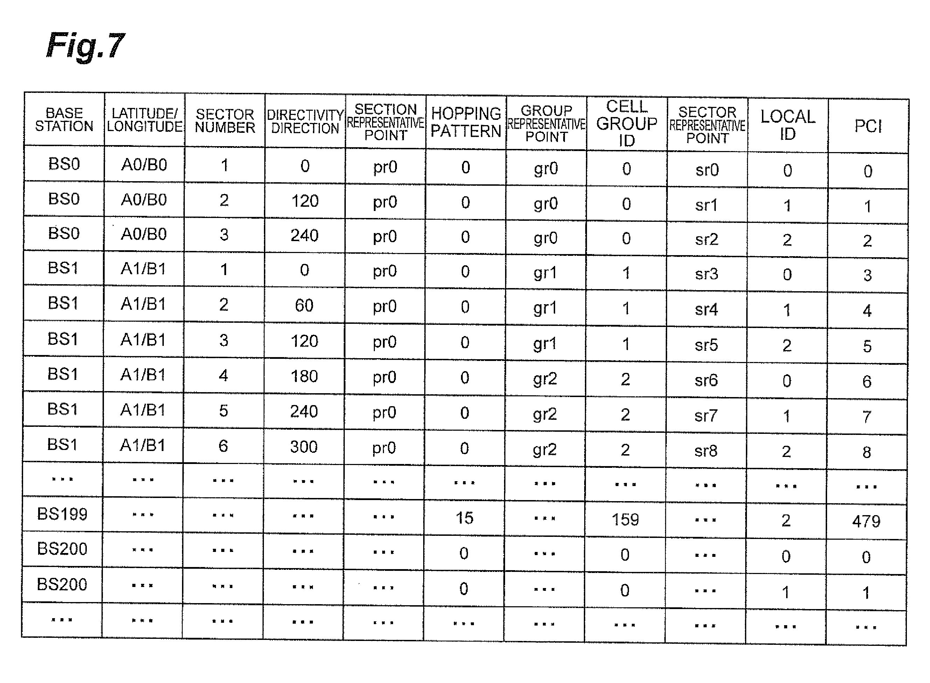

Moreover, the data management module 23 holds a table of physical positions (base station, sector representative point, group representative point, section representative point) and logical IDs corresponding to them (Local ID, Cell group ID, and a Hopping pattern, PCI) as illustrated in Fig. 7, for example. In Fig. 7, all the cells in the table have values, but it is assumed in the subsequent description that values are described only in the rows of the base station, latitude/longitude, sector number, and directivity directions first, and the values in the other rows are sequentially described. The values described first may be those obtained from data in Fig. 3 held by the base station specification management module 21.

The sector representative point determination module 2 calculates an incoming range of a radio wave in the sector on the basis of the data such as latitude/longitude of the base station, altitude, antenna height, incoming direction of the wave included in the base station specification management module 21 and determines a sector representative point which is an arbitrary position in the sector. For example, the sector representative point is set to a radio wave irradiation point from inclination of the vertical direction with respect to the base station antenna direction. Other than that, the sector representative point may be set at a point in the center of gravity of the radio wave irradiation point from the base station or a middle point. The sector representative point determination module 2 holds the position of the determined sector representative point in the design database management module 20.

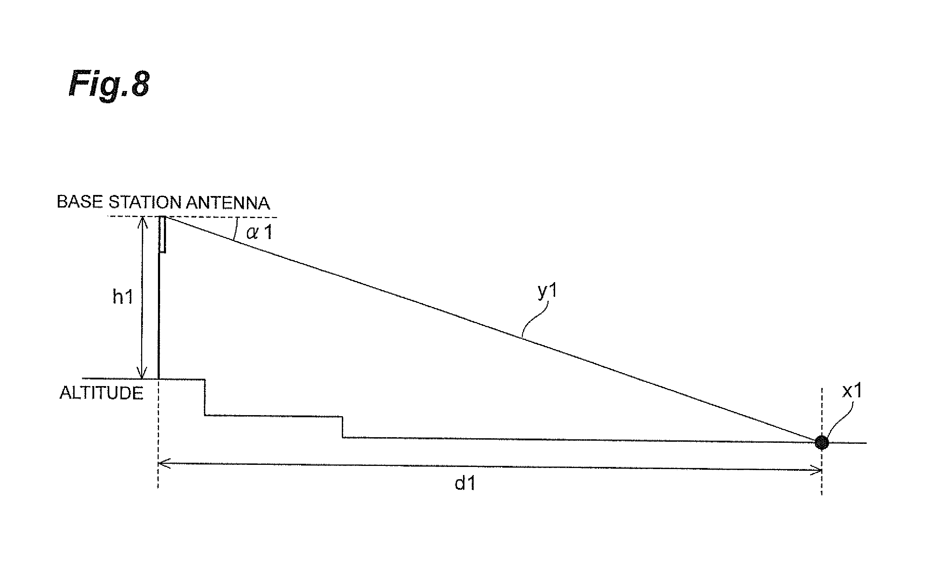

Fig. 8 is a diagram illustrating the radio wave irradiation point from the base station antenna. The sector representative point determination module 2 acquires a radio wave incoming from direction y1 and a radio wave irradiation point x1 from the base station on the basis of the altitude of the base station antenna and antenna height h1, and an inclination angle (tilt angle) a in the vertical direction of the radio wave. A distance d1 indicates the incoming distance of the radio wave. The sector representative point determination module 2 sets the acquired radio wave irradiation point x1 as the sector representative point.

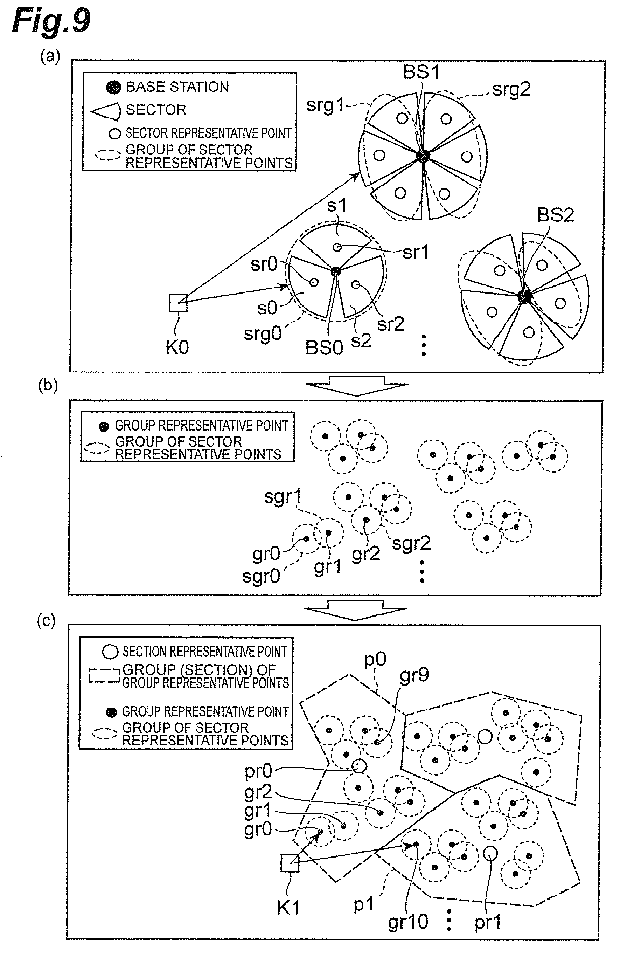

Determination of the sector representative point by the sector representative point determination module 2 will be described by referring to Fig. 9(a). In Fig. 9(a), a base station BSO constitutes sectors s0 to s2 which are three sectors. The sector representative point determination module 2 determines a sector representative point sr0 for the sector s0 on the basis of the data included in the base station specification management module 21 as described above. Similarly, the sector representative point determination module 2 determines a sector representative point sr1 of the sector s1 and a sector representative point sr2 of the sector s2. The sector representative points are determined similarly for the sectors of the other base stations. The sector representative point determination module 2 describes the determined sector representative point (it may be latitude and longitude of the position of the sector representative point but for convenience of explanation, it is referred to as the sector representative point) in a corresponding row of a column of the sector representative points in Fig. 7 (sr0 to sr8 and the like).

The group generation module 3 reads out necessary information such as the base point position, the grouping setting number and the like from the parameter management module 22 and the position of the sector representative point and the like from the data management module 23 and performs grouping and calculation of the sector representative point which is the closest from the base point and performs grouping. The group generation module 3 is composed of the group representative point determination module 4 and the section representative point determination module 5.

The group representative point determination module 4 groups the sector representative points in a predetermined number or less and determines the group representative point which is a representative point of the group of the sector representative points on the basis of the grouped sector representative points. The group representative point determination module 4 holds the position of the determined group representative point in the data management module 23.

The group representative point determination module 4 may group the sector representative points having a short distance from each other in the predetermined number or less.

As an example of the above-described grouping, the group representative point determination module 4 selects and groups the sector representative point, each having a short distance from a predetermined base point, until a predetermined number or less is reached in the order of the distance from the shortest distance and repeatedly groups the remaining sector representative points which have not been grouped yet with a similar procedure when grouping the sector representative points. If the range under control is expressed by a polygon, the predetermined base point may be set at a position of any of the angles of the polygon. As a result, the calculation load of the distance by the group representative point determination module 4 can be decreased.

As another example of the above-described grouping, the following grouping can be cited. The group representative point determination module 4 first selects a sector representative point having the shortest distance from the predetermined base point when grouping the sector representative points. Subsequently, an unselected sector representative point having a short distance from the selected sector representative point is selected in the order of the distance from the shortest distance until the total number of the selected sector representative points and the unselected sector representative points reaches the predetermined number or less, and the sector representative points are grouped. Then, a similar procedure is repeated for the remaining sector representative points having not been grouped yet and grouping is performed. If the range under control is expressed by a polygon, the predetermined base point may be set at a position of any of the angles of the polygon.

Determination of the group representative point by the group representative point determination module 4 will be specifically described by referring to Figs. 4, 9(a) and 9(b). First, the group representative point determination module 4 obtains the Cell group ID grouping setting number "3" and the latitude and longitude of the Cell group ID base point position from Fig. 4. It is assumed that the obtained base point position is a position of a base point K0 illustrated in Fig. 9(a). Subsequently, the group representative point determination module 4 selects the sector representative points having a short distance to K0 up to three Cell group ID grouping setting number at the maximum in the order and groups the selected sector representative points. For example, in Fig. 9(a), the group representative point determination module 4 selects three sector representative points, that is, sr0, sr1, and sr2 in the order from the shortest distance to K0 and groups them. Figs. 9(a) and 9(b) illustrate a grouped group srg0.

Subsequently, as illustrated in Fig. 9(b), the group representative point determination module 4 determines a group representative point gr0 which is a position at the center of gravity of the sr0, sr1, and sr2 included in srg0. The group representative point determination module 4 also groups the remaining sector representative points similarly and determines the group representative point. As in the base station BS2 in Fig. 9(a), two sector representative points (not more than three) may be grouped. The group representative point determination module 4 describes the determined group representative point (it may be latitude and longitude of the position of the group representative point but for convenience of explanation, it is referred to as the group representative point) in a corresponding row of a column of the group representative points in Fig. 7 (gr0 to gr2 and the like).

The section representative point determination module 5 groups the group representative points determined by the group representative point determination module 4 in the predetermined number or less and determines a section representative point on the basis of the grouped group representative point. A group of the grouped group representative points is referred to as a section. The section representative point determination module 5 holds the position of the determined section representative point in the design database management module 20.

The section representative point determination module 5 may group the group representative points having a short distance from each other in the predetermined number or less.

As an example of the above-described grouping, an example may be cited in which the section representative point determination module 5 selects and groups the group representative points having a short distance from a predetermined base point in the order from the shortest distance to the predetermined number or less when grouping the group representative points, and a similar procedure is repeated for the remaining group representative points having not been grouped yet and grouping is performed. If the range under control is expressed by a polygon, the predetermined base point may be set at a position of any of the angles of the polygon. As a result, the calculation load of the distance by the section representative point determination module 5 is decreased.

As another example of the above-described grouping, the following grouping can be cited. The section representative point determination module 5 first selects a group representative point with the shortest distance from the predetermined base point when grouping the group representative points. Subsequently, the unselected group representative points having a short distance from the selected group representative point are selected in the order of distance from the shortest until the total number of the selected group representative points and the unselected group representative points reaches the predetermined number or less, and the group representative points are grouped. Then, a similar procedure is repeated for the remaining group representative points having not been grouped yet and grouping is performed. If the range under control is expressed by a polygon, the predetermined base point may be set at a position of any of the angles of the polygon.

Determination of the section representative point by the section representative point determination module 5 will be specifically described by referring to Fig. 9(c). First, the section representative point determination module 5 obtains the Hopping pattern grouping setting number "10" and the latitude and longitude of the Hopping pattern base point position from Fig. 4. The obtained base point position is set as a position of a base point K1 illustrated in Fig. 9(c). Subsequently, the section representative point determination module 5 selects the group representative point gr0 having the shortest distance from K1. Subsequently, the section representative point determination module 5 selects the group representative points having a short distance from gr0 in the order from the shortest distance until the number of the selected group representative points reaches the Hopping pattern grouping setting number of 10, that is, gr0 to gr9.

Subsequently, the section representative point determination module 5 groups the selected gr0 to gr9. Fig. 9(c) illustrates a grouped group p0. Subsequently, the section representative point determination module 5 determines a section representative point pr0 which is a position at the center of gravity of gr0 to gr9 included in p0. Similarly for the determination of the subsequent section representative point, the section representative point determination module 5 selects a group representative point gr10 having the shortest distance from K1 and selects the group representative points having a short distance from gr10, until the number of the selected group representative points reaches 10 or less, groups them as a group p1 and determines a section representative point pr1. The section representative point determination module 5 also groups the remaining group representative points and determines the section representative point. The section representative point determination module 5 describes the determined section representative point (it may be latitude and longitude of the position of the section representative point but for convenience of explanation, it is referred to as the section representative point) in a corresponding row of a column of the section representative points in Fig. 7 (pr0 and the like).

The group ID allocation module 6 allocates group IDs. The group ID allocation module 6 is composed of the group representative point ID allocation module 7 and the section representative point ID allocation module 8.

The group representative point ID allocation module 7 allocates a Cell group ID which identifies a group representative point determined by the group representative point determination module 4 and whose position (the group representative point for convenience of explanation in this embodiment) is held in the data management module 23.

The group representative point ID allocation module 7 may allocate the Cell group IDs to the group representative points in the order from the shortest distance between the predetermined base point and the group representative point.

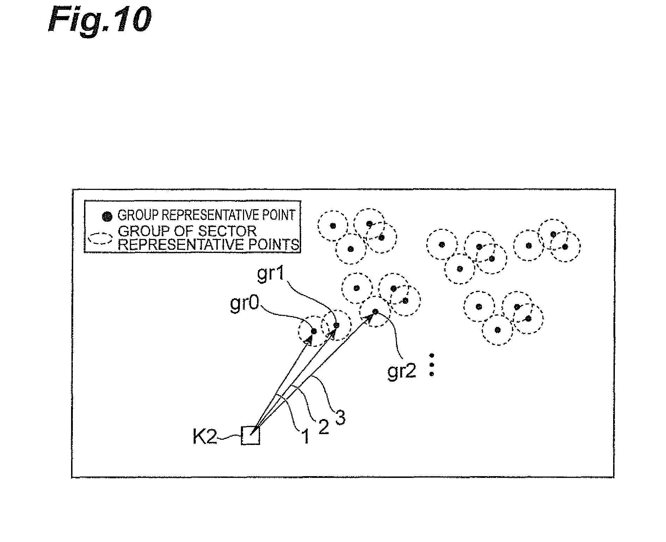

Allocation of the Cell group ID by the group representative point ID allocation module 7 will be specifically described by referring to Fig. 10. The group representative point ID allocation module 7 obtains the latitude and longitude of the Cell group ID base point position from Fig. 4. The obtained start point position is set as a position of a base point K2 illustrated in Fig. 10. It is assumed this time that the Cell group ID base point position is the same as the Cell group ID base point position used in the determination of the group representative point by the above-described group representative point determination module 4, but the base point positions may be different from each other.

Subsequently, the group representative point ID allocation module 7 allocates the Cell group ID to the group representative point gr0 having the short distance from K2. Subsequently, the group representative point ID allocation module 7 allocates the Cell group ID to the group representative point gr1 having the next shortest distance from K2. The Cell group IDs to be allocated are allocated serially. For example, when the group representative point ID allocation module 7 allocates the Cell group IDs serially to gr0, gr1, and gr2, an ID with the Cell group ID of 0 is allocated to gr0, an ID with the Cell group ID of 1 is allocated to gr1, and an ID with the Cell group ID of 2 is allocated to gr2. Specifically, the group representative point ID allocation module 7 describes the Cell group ID in a corresponding row of the column of the Cell group ID in Fig. 7 (0 to 2 and the like).

The section representative point ID allocation module 8 allocates the Hopping pattern which identifies the section representative point determined by the section representative point determination module 5 and whose position (section representative point for convenience of explanation in this embodiment) is held in the data management module 23.

The section representative point ID allocation module 8 may allocate the Hopping patterns to the section representative points in the order from the shortest distance between the predetermined base point and the section representative point.

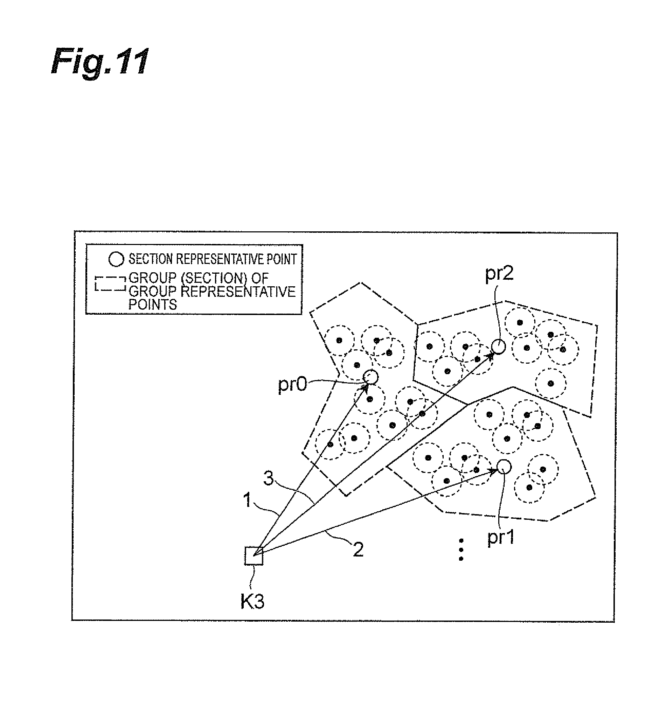

Allocation of the Hopping pattern by the section representative point ID allocation module 8 will be specifically described by referring to Fig. 11. The section representative point ID allocation module 8 obtains the latitude and longitude of the Hopping pattern base point position from Fig. 4. The obtained start point position is set as a position of a base point K3 illustrated in Fig. 11. It is assumed this time that the Hopping pattern base point position is the same as the Hopping pattern base point position used in the determination of the section representative point by the above-described section representative point determination module 5, but the base point positions may be different from each other.

Subsequently, the section representative point ID allocation module 8 allocates the Hopping pattern to the section representative point pr0 having the short distance from K3. Subsequently, the section representative point ID allocation module 8 allocates the Hopping pattern to the group representative point pr1 having the next shortest distance from K3. The Hopping patterns to be allocated are allocated serially. For example, when the section representative point ID allocation module 8 allocates the Hopping patterns serially to pr0, pr1, and pr2, an ID with the Hopping pattern of 0 is allocated to pr0, an ID with the Hopping pattern of 1 is allocated to pr1, and an ID with the Hopping pattern of 2 is allocated to pr2. Specifically, the section representative point ID allocation module 8 describes the Hopping pattern in a corresponding row of the column of the Hopping pattern in Fig. 7 (0 and the like).

Here, a section adjacent to a section managed by another management entity among the sections managed by one management entity is called a boundary section (boundary group). The section representative point ID allocation module 8 may select and allocate a Hopping pattern different from the Hopping pattern allocated to the section representative point of the boundary section managed by another management entity to the section representative point of the boundary section. Hereinafter, a collection of the sections managed by one management entity is called a control area, a collection of the boundary sections is called a boundary area, and a collection of the sections other than the boundary section in the control area is called an ordinary area. The control area can be divided in any way such as by the unit of the nation or the city.

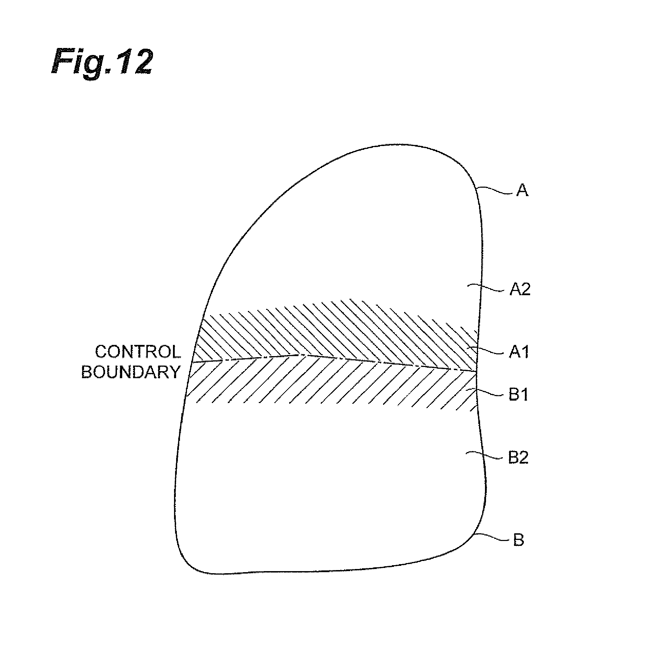

Fig. 12 is a diagram illustrating the control area, the boundary area, and the ordinary area. A control area A and a control area B adjoin each other and have a control boundary between them. The control area A is composed of a boundary A1 and an ordinary area A2. On the other hand, the control area B is composed of a boundary area B1 and an ordinary area B2. For example, if a Hopping pattern has been already allocated to the boundary area B1, the section representative point ID allocation module 8 selects and allocates Hopping patterns differently from the Hopping pattern allocated to the boundary area B1 when allocating Hopping patterns to the boundary area A1.

When a Hopping pattern is to be allocated, it is preferable that the Hopping patterns are divided to those that can be allocated to the boundary area and to the ordinary area in the boundary of the control area. For example, Fig. 6 illustrates the Hopping pattern that the section representative point ID allocation module 8 can allocate to the boundary area A1, the ordinary area A2, the boundary area B1, and the ordinary area B2 in Fig. 12. For example, the Hopping pattern with the ID of 0 to 3 can be allocated by the section representative point ID allocation module 8 in the boundary area A1, and the Hopping pattern with the ID of 4 to 15 can be allocated by the section representative point ID allocation module 8 in the ordinary area A2. In this case, when allocating a Hopping pattern to the boundary area A1, the section representative point ID allocation module 8 refers to the Table in Fig. 6 and selects and allocates Hopping patterns with the ID of 0 to 3. In the Table in Fig. 6, there is only one column indicating the Hopping pattern that can be allocated to the boundary area A1, but there may be a plurality of them. In that case, the section representative point ID allocation module 8 selects one of a plurality of columns and then, allocates Hopping patterns included in that column.

If it is difficult to repeatedly allocate Hopping patterns in the ordinary area, Hopping patterns that can be allocated to the boundary area may be used. Here, if Hopping patterns are not divided, it is difficult to check duplication of the Hopping pattern across the control in the vicinity of the boundary area. Thus, consideration should be taken so as not to allocate an affected ID in the vicinity of the boundary area.

The sector representative point ID allocation module 10 allocates Local ID which identifies a sector representative point determined by the sector representative point determination module 2 and whose position (sector representative point for convenience of explanation in this embodiment) is held in the data management module 23 on the basis of the group represented by the group representative point determined by the group representative point determination module 4.

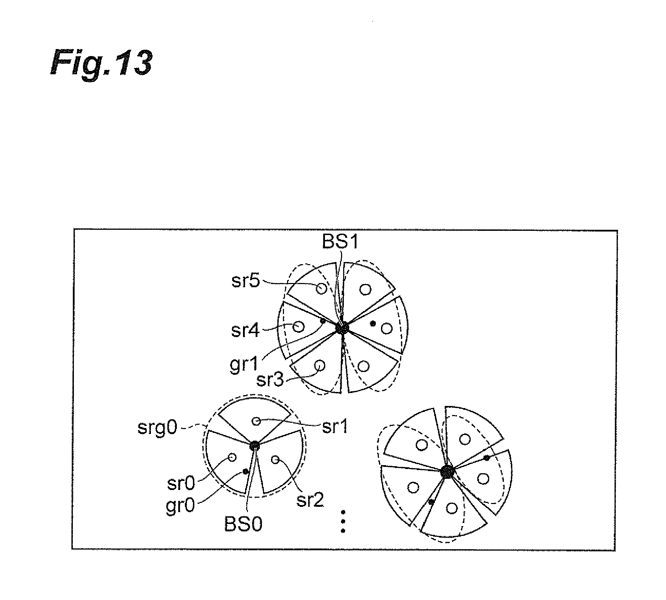

Allocation of the Local ID by the sector representative point ID allocation module 10 will be specifically described by referring to Figs. 7 and 13. The sector representative point ID allocation module 10 allocates Local ID serially to the sector representative point for which the same group representative point is determined in the group representative point column in Fig. 7. For example, for the sector representative points sr0 to sr2 included in the group srg0 represented by the group representative point gr0, the sector representative point ID allocation module 10 allocates an ID with the Local ID of 0 to sr0, an ID with the local ID of 1 to sr1, and an ID with the Local ID of 2 to sr2. Specifically, the sector representative point ID allocation module 10 describes the Local ID in a corresponding row of the column of the Local ID in Fig. 7 (0 to 2 and the like). The sector representative point ID allocation module 10 also allocates the Local ID to the sector representative point sr3 and after similarly.

When the sector representative point ID allocation module 10 allocates the Local ID, the sector representative point LID allocation module 10 may allocate the Local IDs so that the Local IDs of the sector representative points of the adjoining sectors in the plurality of sectors of the same base station are not duplicated.

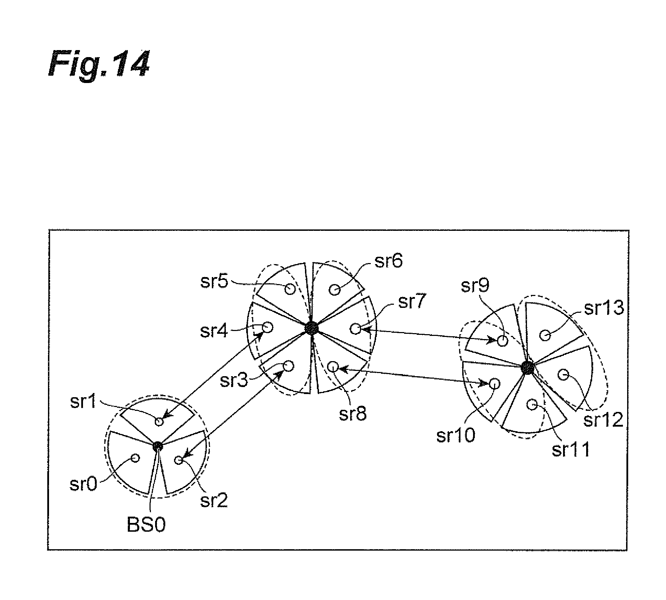

For example, the sector representative point ID allocation module 10 allocates an ID with the Local ID of 0 to sr0, an ID with the Local ID of 1 to sr1, and an ID with the Local ID of 2 to sr2 so that the Local IDs of the sector representative points of the adjoining sectors are not duplicated in each of the sectors represented by the plurality of sector representative points sr0 to sr2 of the base station BS0, respectively, in Fig. 14.

Moreover, when the sector representative point ID allocation module 10 allocates the Local ID, the sector representative point ID allocation module 10 may allocate the Local ID so that the Local ID of the sector representative point of the sector adjacent to the sector represented by the sector representative point is not duplicated with the Local ID in the sectors of the adjoining base stations.

For example, in Fig. 14, an ID with the Local ID of 1 has been already allocated to the sector representative point sr1 by the sector representative point ID allocation module 10, and after that, when the sector representative point ID allocation module 10 allocates the Local ID to the sector representative point sr4, the sector representative point ID allocation module 10 allocates an ID with the Local ID of other than 1. Moreover, the sector representative point ID allocation module 10 may allocate the Local ID so that the Local IDs are not duplicated in the sector representative points of the sectors with directivity directions of the sectors close to each other in the adjacent base stations such as sr2 and sr3, sr7 and sr9, and sr8 and sr10.

In the above-described explanation, when the Local ID, the cell group ID, and Hopping patterns are to be acquired, the group ID is allocated in the order of the allocation of the Cell group ID by the group representative point ID allocation module 7, the allocation of the Hopping pattern by the section representative point ID allocation module 8, and the allocation of the Local ID by the sector representative point ID allocation module 10, but this is not limiting. The order of allocating the above-described three group IDs may be optional.

The PCI allocation module 11 allocates PCI of a sector on the basis of the Local ID allocated by the sector representative point ID allocation module 10, the Cell group ID allocated by the group representative point ID allocation module 7, and the Hopping pattern allocated by the section representative point ID allocation module 8.

Moreover, the PCI allocation module 11 may allocate the PCI of the sector on the basis of an identification information allocation table which is an identification information allocation table stored in advance in the data management module 23 and can uniquely determine the PCI from a combination of the Local ID, the Cell group ID, and the Hopping pattern.

Allocation of the PCI by the PCI allocation module 11 will be specifically described by referring to Fig. 5 and 7. The PCI allocation module 11 calculates the PCI from the correspondence table in Fig. 5 and allocates the PCI to the sector indicated in each row in Fig. 7 on the basis of a combination of values of the Local ID column, the Cell group ID column, and the Hopping pattern column. The PCI to be allocated is described in the PCI column in Fig. 7. For example, the Local ID is 2, the Cell group ID is 1, and the Hopping pattern is 0 for the sector on the 6th row in Fig. 7, and 5 as the PCI corresponding to them is calculated from the correspondence table in Fig. 5, and 5 is described in the PCI column in Fig. 7.

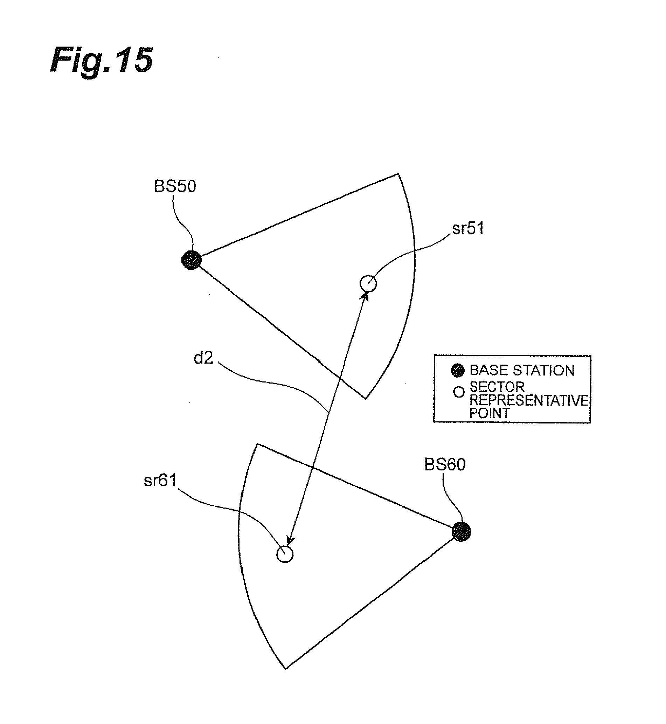

When the PCI allocation module 11 allocates the PCI to the sector, the PCI allocation module 11 may calculate a separation distance between the sector representative point of the sector and the sector representative point of the sector to which the same PCI as the PCI to be allocated has been already allocated and allocate PCI such that a predetermined distance can be ensured for the separation distance. For example, in Fig. 15, it is assumed that the PCI allocation module 11 allocates an ID with the PCI of 0 to sr51. At this time, it is also assumed that an ID with the PCI of 0 has been already allocated to sr61, and a predetermined distance cannot be ensured for a separation distance d2 between sr51 and sr61. Then, the PCI allocation module 11 allocates an ID with the PCI of 1 to sir51. In re-allocation, the PCI with the same Local ID as a preliminary or original Local ID in the same Hopping pattern may be selected with preference. In that case, the Cell group ID, the Local ID, and the Hopping pattern associated with the already-allocated PCI may be replaced, respectively.

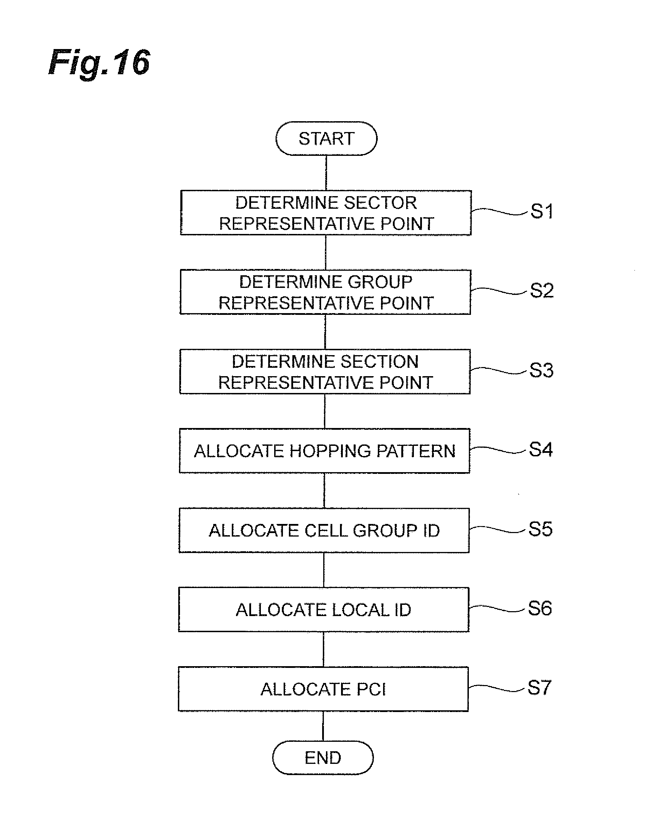

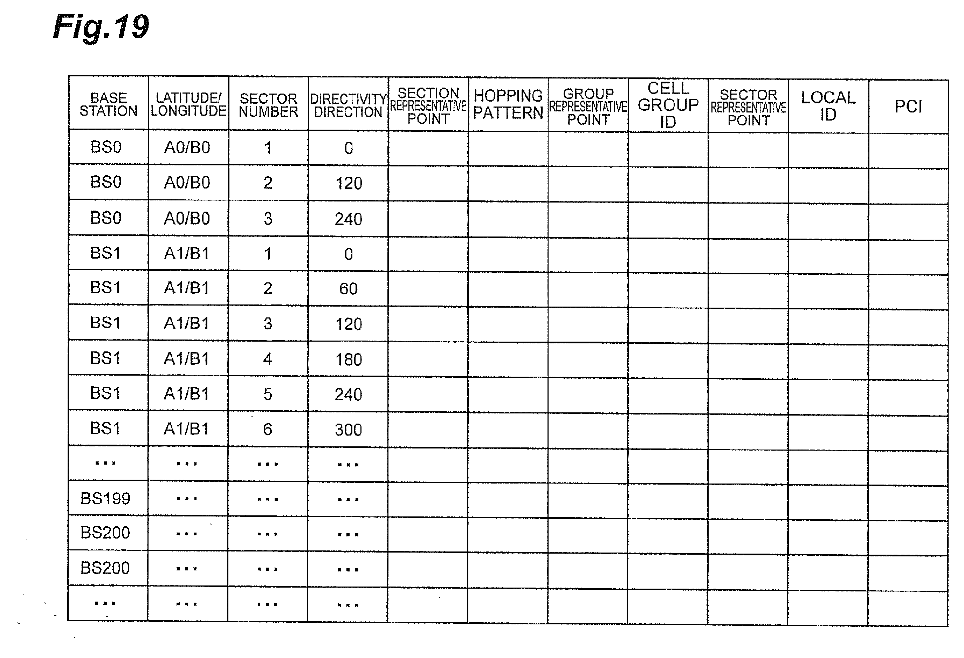

Subsequently, processing of the identification information allocation device 1 configured as above will be described. Fig. 16 is a flowchart illustrating the processing of the identification information allocation device 1. Moreover, a process in which data is described in the table in the above-described Fig. 7 will be illustrated by using Figs. 19 to 26. First, the state is as illustrated in Fig. 19.

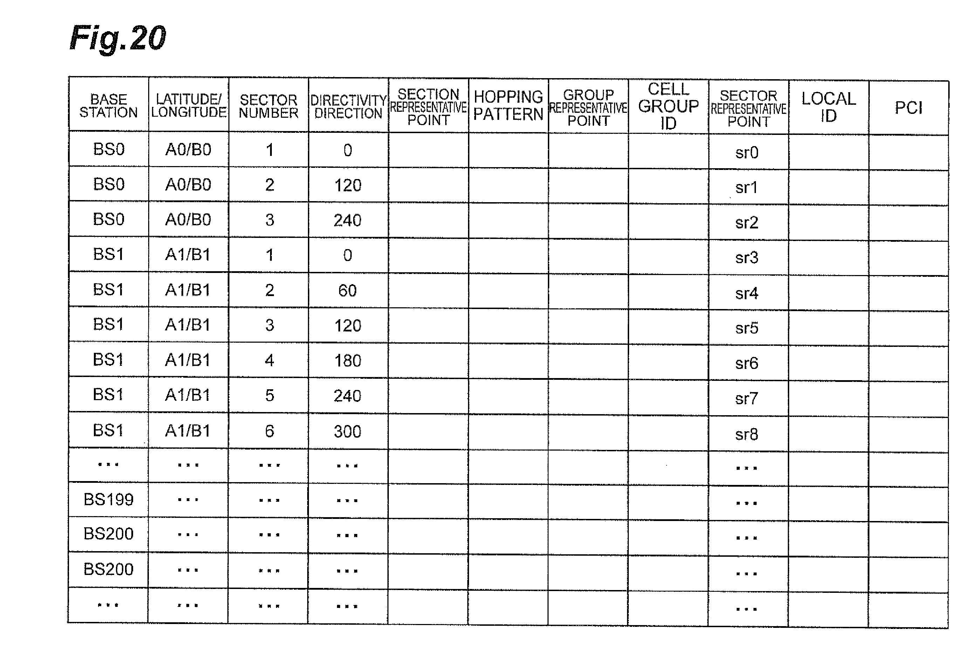

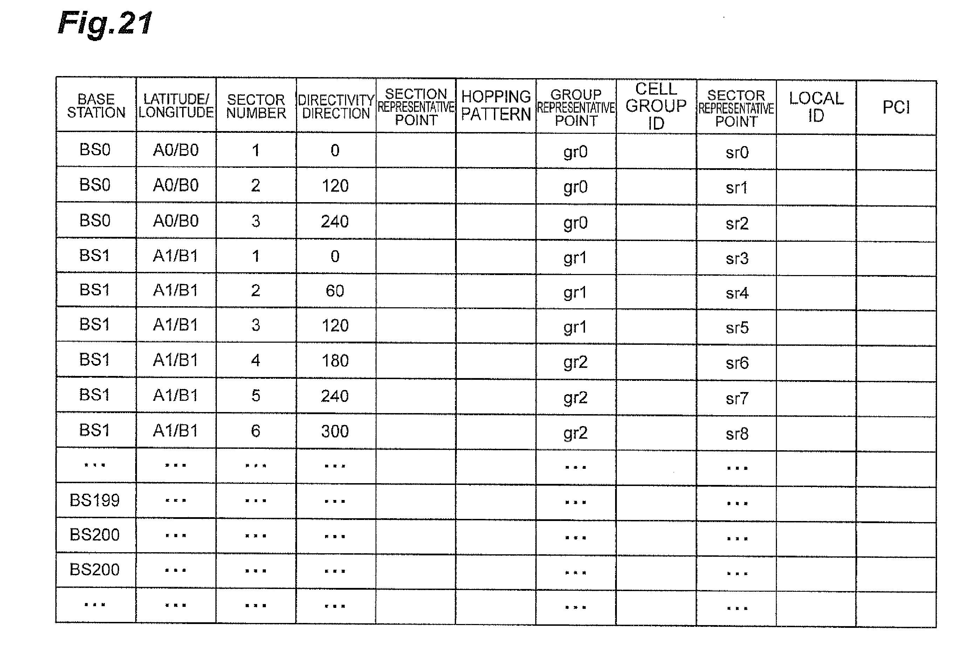

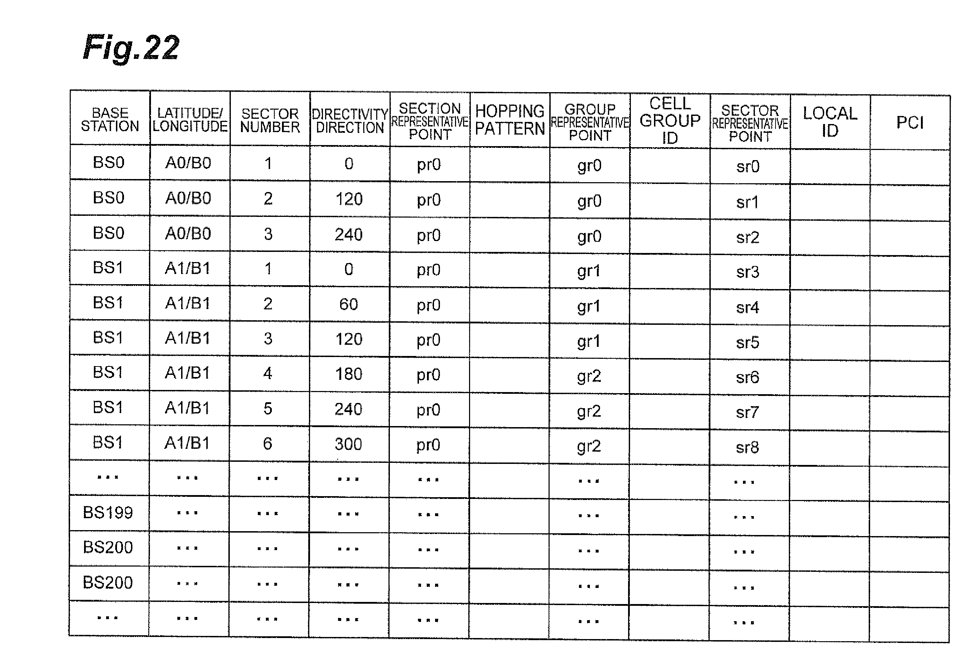

First, the sector representative point determination module 2 determines the sector representative points of all the sectors (S1, first representative point determination step). At this point of time, the state proceeds to that illustrated in Fig. 20. Subsequently, the group representative point determination module 4 groups all the sector representative points, and the group representative point is determined on the basis of the grouped sector representative points (S2, second representative point determination step). At this point of time, the state proceeds to that illustrated in Fig. 21. Subsequently, the section representative point determination module 5 groups all the group representative points, and the section representative point is determined on the basis of the grouped group representative points (S3, third representative point determination step). At this point of time, the state proceeds to that illustrated in Fig. 22.

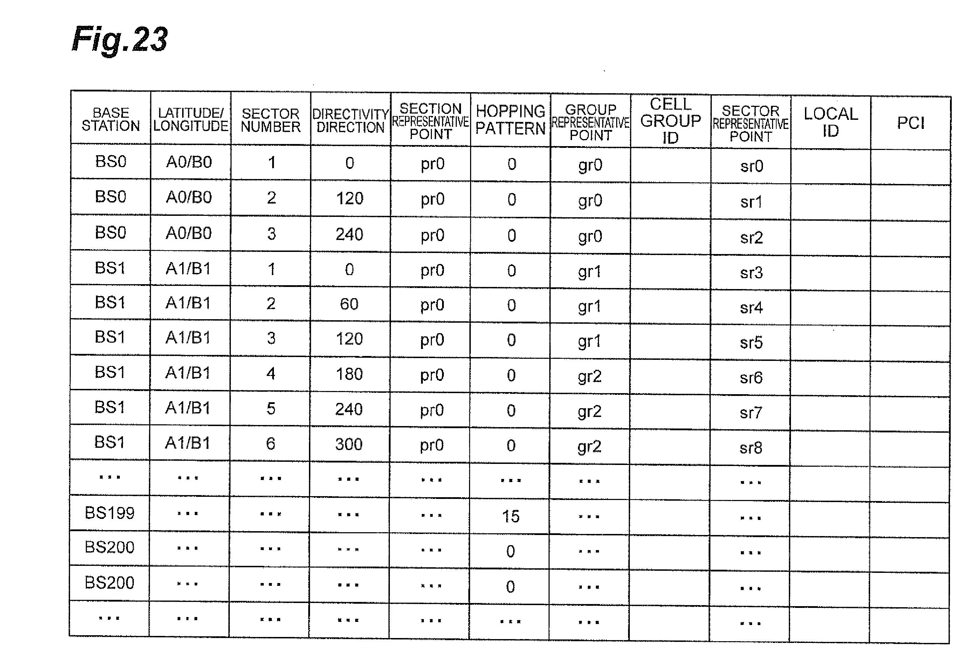

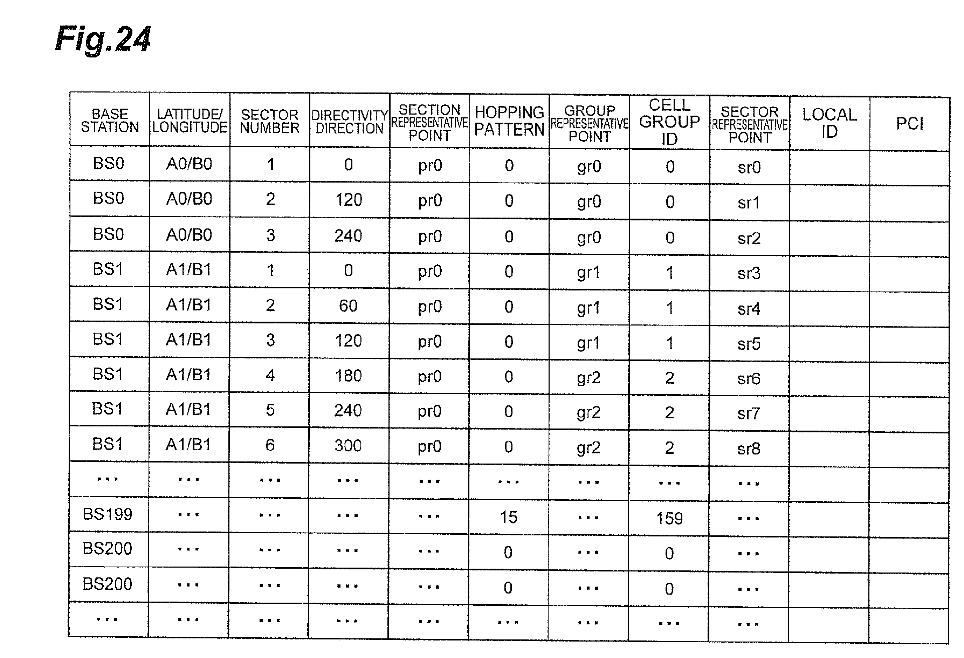

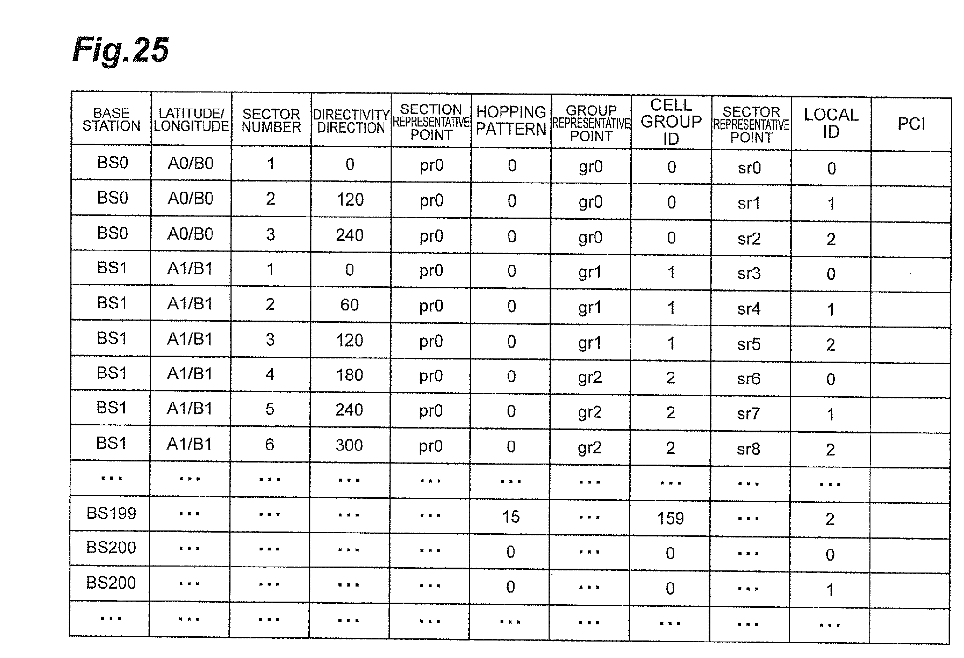

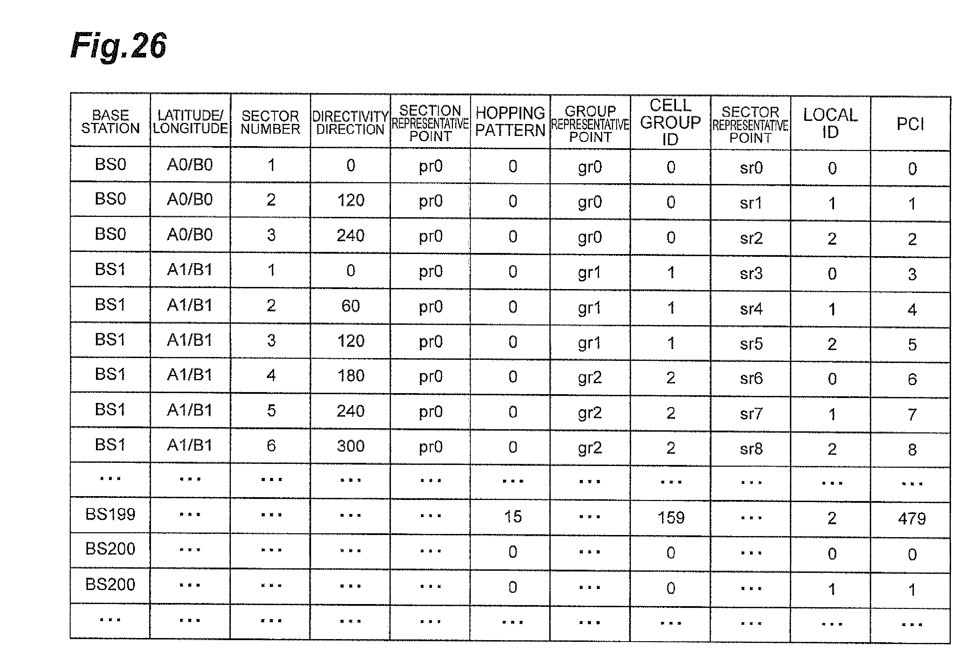

Subsequently, the section representative point ID allocation point 8 allocates the Hopping patterns to all the section representative points (S4, third identification information allocation step). At this point of time, the state proceeds to that illustrated in Fig. 23. Subsequently, the group representative point ID allocation module 7 allocates the cell group IDs to all the group representative points (S5, second identification information allocation step). At this point of time, the state proceeds to that illustrated in Fig. 24. Subsequently, the sector representative point ID allocation module 10 allocates the Local IDs to all the sector representative points on the basis of the group represented by the sector representative point (S6, first identification information allocation step). At this point of time, the state proceeds to that illustrated in Fig. 25. Finally, the PCI allocation module 11 allocates the PCI to all the sectors on the basis of the Local ID, the Cell group ID, and the Hopping pattern (S7, identification information allocation step). At this point of time, the state proceeds to that illustrated in Fig. 26.

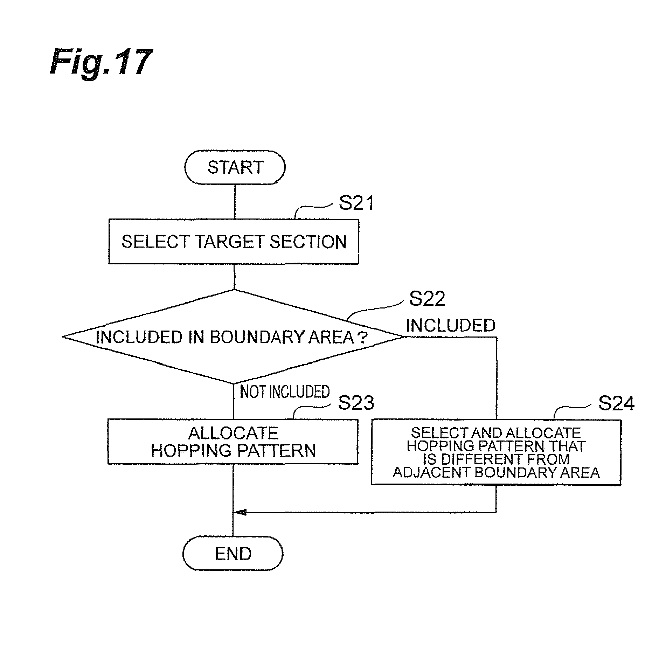

Here, an example of details of the processing at S5 will be described by using Fig. 17. Fig. 17 is a flowchart illustrating processing relating to allocation of the Hopping pattern by the section representative point ID allocation module 8 included in the identification information allocation device 1.

First, the section representative point ID allocation module 8 selects a target section to which the Hopping pattern is to be allocated (S21). Subsequently, the section representative point ID allocation module 8 determines whether the target section is included in the boundary area or not (S22). If it is determined that the target section is not included in the boundary area at S22, the section representative point ID allocation module 8 allocates the Hopping pattern as usual (S23). If it is determined at S22 that the target section is included in the boundary area, the section representative point ID allocation module 8 selects and allocates a Hopping pattern that is different from the adjacent boundary area by using the Table in Fig. 6 and the like (S24). The section representative point ID allocation module 8 repeatedly applies the above-described procedure S21 to S24 to all the sections to which the Hopping patterns are to be allocated.

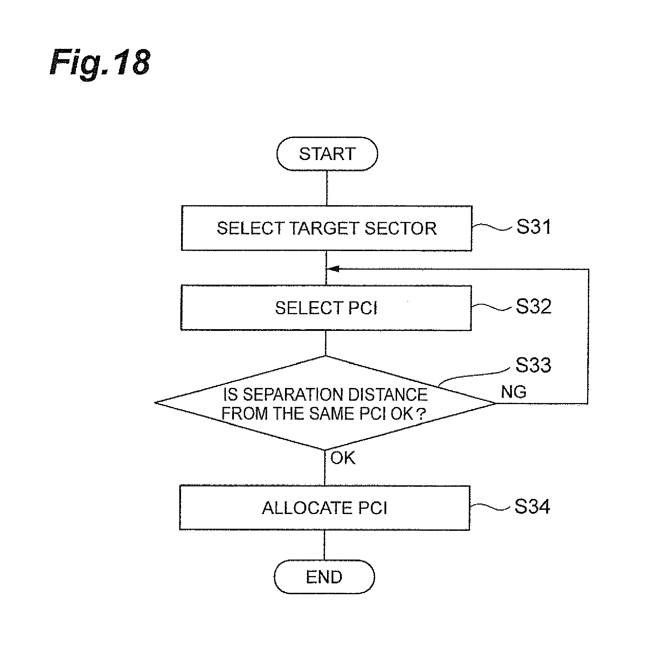

Subsequently, an example of details of the processing at S7 will be described by using Fig. 18. Fig. 18 is a flowchart illustrating processing relating to allocation of the PCI by the PCI allocation module 11 included in the identification information allocation device 1.

First, the PCI allocation module 11 selects the target sector to which the PCI is to be allocated (S31). Subsequently, the PCI allocation module 11 selects the PCI to be allocated to the target sector (S32). At the point of time at S32, the PCI is only selected and not allocated in actuality. Subsequently, the PCI allocation module 11 calculates a separation distance between the sector representative point of the target sector and the sector representative point to which the same PCI is allocated (S33). If the PCI allocation module 11 determines that a predetermined separation distance cannot be ensured at S33, the routine returns to S32 and another PCI is selected. If the PCI allocation module 11 determines that the predetermined separation distance can be ensured at S33, the selected PCI is allocated to the target sector (S34). The PCI allocation module 11 repeatedly applies the above-described procedure of S31 to S34 to all the sectors to which the PCIs are to be allocated.

Subsequently, a working effect of the identification information allocation device 1 configured as above will be described.

First, the sector representative point determination module 2 determines the sector representative point. Subsequently, the group representative point determination module 4 groups the sector representative points in the predetermined number or less and determines the group representative point on the basis of the grouped sector representative points. Subsequently, the section representative point determination module 5 groups the group representative points in the predetermined number or less and determines the section representative point on the basis of the grouped group representative points. Subsequently, the section representative point ID allocation module 8 allocates the Hopping pattern which identifies the section representative point, the group representative point ID allocation module 7 allocates the Cell group ID which identifies the group representative point, and the sector representative point ID allocation module 10 allocates the Local ID which identifies the sector representative point on the basis of the group represented by the group representative point. Subsequently, the PCI allocation module 11 allocates the PCI of the communication area on the basis of the Local ID, the cell group ID, and the Hopping pattern. As a result, the sector ID and the group ID of the sector group can be allocated efficiently and appropriately.

Moreover, the group representative point determination module 4 groups the sector representative points having a short distance from each other in the predetermined number or less. By grouping the sector representative points within a range where the sector representative points closely gather as described above, the grouped area can be set smaller, and the groups with the same Cell group ID can be prevented from adjoining each other. That is, the group ID of the sector group can be allocated efficiently and appropriately.

Moreover, the section representative point determination module 5 groups the group representative points having a short distance from each other in the predetermined number or less. By grouping the group representative points within a range where the group representative points closely gather as described above, the grouped area can be set smaller, and the groups with the same Hopping pattern can be prevented from adjoining each other. That is, the group ID of the sector group can be allocated efficiently and appropriately.

Moreover, when the sector representative point ID allocation module 10 allocates a PCI, the PCI is allocated so that the PCIs of the sector representative points of the adjoining communication areas are not duplicated in the plurality of communication areas of the same base station. As a result, the PCI can be repeatedly allocated so that the PCIs are not duplicated in the communication areas of the same base station. That is, the group ID of the sector group can be allocated efficiently and appropriately.

Moreover, when the sector representative point ID allocation module 10 allocates a PCI, the PCI is allocated so that the PCI of the sector representative point of the communication area adjacent to the communication area represented by the sector representative point is not duplicated with the PCI in the adjoining communication areas of the base station. As a result, the PCI can be repeatedly allocated so that the PCIs are not duplicated in the adjoining communication areas of the base station. That is, the group ID of the sector group can be allocated efficiently and appropriately.

Moreover, the group representative point ID allocation module 7 allocates the Cell group ID to the group representative point in the order of the distance between the predetermined base point and the group representative point from the shortest distance. As a result, the group ID of the sector group can be allocated efficiently and appropriately.

Moreover, the section representative point ID allocation module 8 allocates the Hopping pattern to the section representative point in the order of the distance between the predetermined base point and the section representative point from the shortest distance. As a result, the group ID of the sector group can be allocated efficiently and appropriately.

Moreover, the section representative point ID allocation module 8 selects and allocates the Hopping pattern that is different from the Hopping pattern allocated to the section representative point of the boundary group managed by another management entity to the section representative point of the boundary group. As a result, it becomes unnecessary to check duplication of the Hopping pattern across the control, and the group ID of the sector group can be allocated efficiently and appropriately.

Moreover, the PCI allocation module 11 allocates the PCI of the communication area on the basis of the identification information allocation table which can uniquely determine the PCI from the combination of the Local ID, the Cell group ID, and the Hopping pattern. As a result, the identification information can be easily determined, and the ID of the sector can be allocated efficiently and appropriately.

Moreover, when the PCI allocation module 11 allocates the PCI to the communication area, a separation distance between the sector representative point of the communication area and the sector representative point of the communication area to which the same PCI as the PCI to be allocated has been already allocated is calculated, and PCI such that a predetermined distance can be ensured for the separation distance allocated. As a result, allocation can be made repeatedly so that the IDs are not duplicated in the communication areas of the adjacent base stations. That is, the sector ID can be allocated efficiently and appropriately.

### Reference Signs List

- 1: identification information allocation device
- 2: sector representative point determination module
- 3: group determination module
- 4: group representative point determination module
- 5: section representative point determination module
- 6: group ID allocation module
- 7: group representative point ID allocation module
- 8: section representative point ID allocation module
- 9: ID allocation module
- 10: sector representative point ID allocation module
- 11: PCI allocation module
- 20: design database management module
- 21.: base station specification management module
- 22: parameter management module
- 23: data management module 23

## Claims

1. An identification information allocation device that allocates identification information that identifies each communication area in a plurality of communication areas of a base station in a mobile communication system, comprising:
first representative point determining means that determines a first representative point that is an arbitrary position in the communication area;
second representative point determining means that groups the first representative points determined by the first representative point determining means in a first predetermined number or less and determines a second representative point on the basis of the grouped first representative points;
third representative point determining means that groups the second representative points determined by the second representative point determining means in a second predetermined number or less and determines a third representative point on the basis of the grouped second representative points;
first identification information allocation means that allocates first identification information that identifies the first representative point determined by the first representative point determining means on the basis of a group represented by the second representative point determined by the second representative point determining means;
second identification information allocation means that allocates second identification information that identifies the second representative point determined by the second representative point determining means;
third identification information allocation means that allocates third identification information that identifies the third representative point determined by the third representative point determining means; and
identification information allocation means that allocates identification information of the communication area on the basis of the first identification information allocated by the first identification information allocation means, the second identification information allocated by the second identification information allocation means, and the third identification information allocated by the third identification information allocation means.

2. The identification information allocation device according to claim 1, wherein
the second representative point determining means groups the first representative points having a short distance from each other in the first predetermined number or less.

3. The identification information allocation device according to claim 1 or 2, wherein
the third representative point determining means groups the second representative points having a short distance from each other in the second predetermined number or less.

4. The identification information allocation device according to any one of claims 1 to 3, wherein
when allocating the first identification information, the first identification information allocation means allocates the first identification information so that the first identification information of the first representative points of the adjoining communication areas are not duplicated in the plurality of communication areas of the same base station.

5. The identification information allocation device according to any one of claims 1 to 4, wherein
when allocating the first identification information, the first identification information allocation means allocates the first identification information so that the first identification information of the first representative point of the communication area adjacent to the communication area represented by the first representative point and the first identification information are not duplicated in the communication areas of the adjoining base stations.

6. The identification information allocation device according to any one of claims 1 to 5, wherein
the second identification information allocation means allocates the second identification information to the second representative point in the order of a distance between a first predetermined base point and the second representative point from the shortest.

7. The identification information allocation device according to any one of claims 1 to 6, wherein
the third identification information allocation means allocates the third identification information to the third representative point in the order of a distance between a second predetermined base point and the third representative point from the shortest.

8. The identification information allocation device according to any one of claims 1 to 7, wherein
among the groups, each represented by the third representative point determined by the third representative point determining means of the identification information allocation device with respect to the communication area of the base station managed by one management entity, to the third representative point of a boundary group that is a group adjacent to the group represented by the third representative point determined by the third representative point determining means of the identification information allocation device with respect to the communication area of the base station managed by another management entity,
the third identification information allocation means selects and allocates the third identification information that is different from the third identification information allocated to the third representative point of the boundary group managed by another management entity.

9. The identification information allocation device according to any one of claims 1 to 8, wherein
the identification information allocation means allocates identification information of the communication area on the basis of an identification information allocation table that is an identification information allocation table stored in advance in the storing module of the identification information allocation device and can uniquely determine identification information from a combination of the first identification information, the second identification information, and the third identification information.

10. The identification information allocation device according to any one of claims 1 to 9, wherein
the identification information allocation means calculates a separation distance between the first representative point of the communication area and the first representative point of the communication area to that the same identification information as the identification information to be allocated has been already allocated and allocates the identification information so that a predetermined distance can be ensured for the separation distance when the identification information is allocated to the communication area.

11. An identification information allocation method, comprising:
a first representative point determining step in that the identification information allocation device for allocating identification information for identifying each communication area with respect to a plurality of the communication areas of a base station in a mobile communication system determines a first representative point that is an arbitrary position in the communication area;
a second representative point determining step in that the identification information allocation device groups the first representative points determined in the first representative point determining step in a first predetermined number or less and determines a second representative point on the basis of the grouped first representative points;
a third representative point determining step in that the identification information allocation device groups the second representative points determined in the second representative point determining step in a second predetermined number or less and determines a third representative point on the basis of the grouped second representative points;
a first identification information allocation step in that the identification information allocation device allocates first identification information that identifies the first representative point determined in the first representative point determining step on the basis of a group represented by the second representative point determined in the second representative point determining step;
a second identification information allocation step in that the identification information allocation device allocates second identification information that identifies the second representative point determined in the second representative point determining step;
a third identification information allocation step in that the identification information allocation device allocates third identification information that identifies the third representative point determined in the third representative point determining step; and
an identification information allocation step in that the identification information allocation device allocates identification information of the communication area on the basis of the first identification information allocated in the first identification information allocation step, the second identification information allocated in the second identification information allocation step, and the third identification information allocated in the third identification information allocation step.
